# EUROPÄISCHE PATENTANMELDUNG

(11) **EP 0 616 201 A1**
(43) Veröffentlichungstag der Anmeldung: **21.09.1994**
(21) Anmeldenummer: 94100972.2
(22) Anmeldetag: 24.01.1994
(51) Int. Cl.: G01K 17/06

(54) **Gehäuse für einen Wärmezähler**

(30) Priorität: 19.03.1993 CH 843/93
(71) Anmelder: Landis & Gyr Business Support AG, CH-6301 Zug (CH)
(72) Erfinder: Hildebrand, Jörg, Dipl.-Ing., D-61449 Steinbach (DE); Hinkel, Martina, D-60389 Frankfurt am Main (DE)
(74) Vertreter: EGLI-EUROPEAN PATENT ATTORNEYS

(57) **Zusammenfassung**

Ein Gehäuse für einen Wärmezähler besteht aus einem Grundgerät (1) und aus einer Anzahl von gleichartig geformten, aufsteckbaren Optionsmodulen (2), wobei die Optionsmodule (2) mittels einer Einrastvorrichtung oder einer plombierbaren Befestigungsvorrichtung in beliebiger Reihenfolge hintereinander an einer Seitenfläche (9) des Grundgerätes (1) aufsteckbar sind. Jedes Optionsmodul (2) weist eine der Seitenfläche (9) entsprechende zweite Seitenfläche (9'') und eine zur Seitenfläche (9) passende erste Seitenfläche (9') auf. Jedes Optionsmodul weist ausserdem an der ersten Seitenfläche (9') eine zu einem Stecker des Grundgerätes passende Steckerkupplung auf und einen die Steckerkupplung umgebenden Dichtungsring (10), der bei aufgestecktem Optionsmodul (2) an der Seitenfläche (9) des Grundgerätes (1) oder eines der bereits aufgesteckten Optionsmodule (2) spritzwasserdicht anliegt.

Die modulare Bauweise ermöglicht es, dass über die elektrische Busverbindung jedes der aufgesteckten Optionsmodule (2) auf alle aktuell gemessenen, berechneten und kumulierten Werte des Grundgerätes (1) zugreifen kann. Auf diese Weise können zusätzliche Funktionen realisiert werden, ohne dass der Wärmezähler zu diesem Zweck ausgewechselt werden muss.

## Beschreibung

Die Erfindung betrifft ein Gehäuse für einen Wärmezähler gemäss dem Oberbegriff des Patentanspruchs 1.

Wärmezähler zur Abrechnung des Warmwasserverbrauchs werden immer häufiger eingesetzt und sind teilweise bereits vorgeschrieben. Wärmezähler müssen deshalb auch in alten Bauten nachgerüstet werden und sind deshalb oft an ungünstigen Stellen plaziert, was die Ablesung zum Teil beträchtlich erschwert. Um die Ablesung zu erleichtern, wurden dreh- und schwenkbare Anzeigen eingeführt.

Ein Beispiel eines Wärmezählers mit dreh- und schwenkbarer Anzeige ist in der DE-G-91 11 365.2 beschrieben. Ein Deckelteil enthält die Anzeige, das Mess- und Rechenwerk sowie eine Batterie und ist an einem Adapterteil bzw. Zwischenstück gelenkig und um einen Winkel von 180° schwenkbar befestigt. Das Zwischenstück ist seinerseits um einen Winkel von knapp 360° drehbar auf dem Messwertgeber befestigt, der in einem Heizungsrohr eingebaut ist und eine Vorrichtung zur Durchflussmessung und einen Temperaturfühler enthält. Im Deckelteil ist die Anzeige so angebracht, dass dieselbe zum Schutz gegen Beschädigung oder Verschmutzung zum Zwischenstück heruntergeklappt werden kann.

Wärmezähler dieser Art weisen jedoch den Nachteil auf, dass sie den heutigen Anforderungen bezüglich Kommunikationsfähigkeit und Flexibilität nicht gerecht werden. Zusätzliche spezielle Funktionen, wie zum Beispiel die Einbindung von Wärmezählern und der von ihnen erfassten Daten in ein Gebäudeleitsystem, oder andere Zusatzfunktionen die es gestatten, den Energieverbrauch für den Kunden übersichtlicher darzustellen und auszuwerten, lassen sich mit Wärmezählern dieser Art nicht realisieren, da sie für die Erfüllung solcher Funktionen nicht ausgerüstet sind. Um zusätzlich erwünschte Funktionen zu erhalten, müssen meist alte Geräte ausgebaut und an deren Stelle neue Geräte eingebaut werden. Andererseits sind in vielen Anwendungen nur Basisfunktionen notwendig.

Es wurde bereits vorgeschlagen, die Funktionalität von elektronischen Geräten weiter zu verbessern, indem aufsteckbare Optionsmodule verwendet werden.

Es ist deshalb die Aufgabe der Erfindung, ein Gehäuse für einen Wärmezähler zu schaffen, das eine wesentlich grössere Funktionalität und Flexibilität in der Anwendung erlaubt.

Diese Aufgabe wird durch die im Kennzeichen des Patentanspruches 1 gegebene Lehre gelöst.

Die Lösung verwendet eine Anzahl von gleichartig geformten Optionsmodulen, die mittels einer Einrastvorrichtung in beliebiger Reihenfolge hintereinander an einem Wärmezähler-Grundgerät aufsteckbar sind.

Der Vorteil besteht darin, dass durch die Kombinierbarkeit der Optionsmodule in beliebiger Reihenfolge eine sehr hohe Flexibilität entsteht und so die unterschiedlichsten Kundenbedürfnisse erfüllt werden können, ohne dass das Grundgerät ausgewechselt werden müsste.

Ein weiterer Vorteil besteht darin, dass das Wärmezähler-Grundgerät so ausgelegt ist, dass jederzeit, direkt vor Ort, Optionsmodule angeschlossen werden können. Die Funktionen der Optionsmodule können ausserdem auf alle aktuell gemessenen, berechneten und kumulierten Werte des Wärmezähler-Grundgerätes zugreifen und diese verarbeiten.

Ein Ausführungsbeispiel der Erfindung wird nachstehend anhand von Zeichnungen näher erläutert. Es zeigen
- Fig. 1: eine Frontansicht auf ein Grundgerät mit zwei aufgesetzten Optionsmodulen,
- Fig. 2: eine Seitenfläche des Grundgerätes, auf die die Optionsmodule aufsetzbar sind,
- Fig. 3: eine zweite Seitenansicht des Grundgerätes,
- Fig. 4: eine dritte Seitenansicht des Grundgerätes mit angedeuteter Kippstellung, und
- Fig. 5: eine perspektivische Darstellung des Optionsmodules.

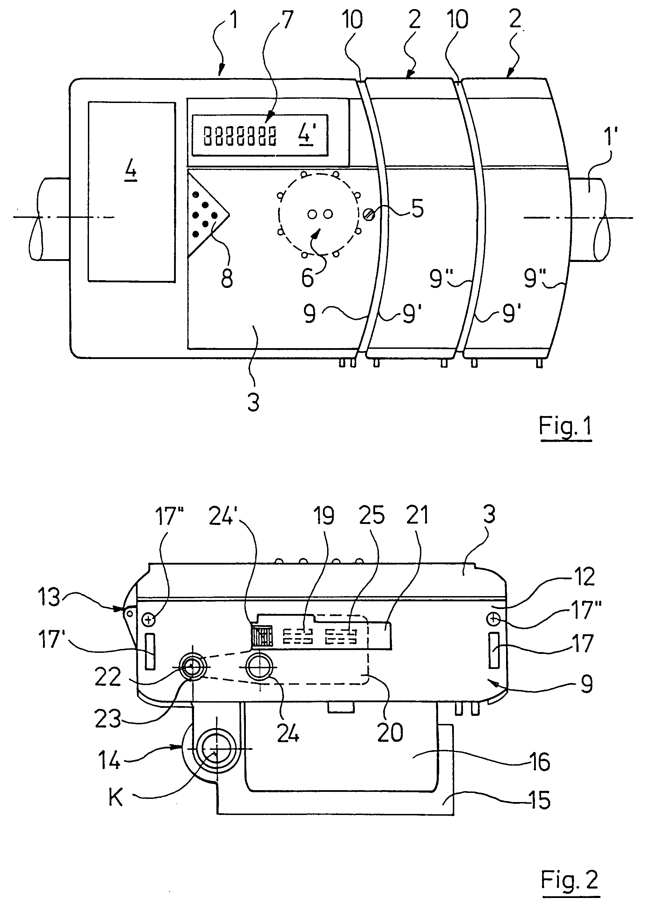

In der Figur 1 ist ein Grundgerät 1 eines Wärmezählers mit zwei aufgesetzten Optionsmodulen 2 dargestellt. Das Grundgerät 1 besitzt einen Deckel 3 mit zwei transparenten Feldern 4, 4', einer Verschlussschraube 5 zur Befestigung des Deckels 3, eine integrierte optische Datenübertragungs-Schnittstelle 6 mit einem optischen Sender und einem optischen Empfänger, eine Flüssigkristall-Anzeigeeinheit 7, die unter dem transparenten Feld 4' liegt, sowie einem Betätigungsknopf 8 zur Umschaltung der Flüssigkristall-Anzeige. An einer konvexen Seitenfläche 9 des Grundgerätes 1 sind die Optionsmodule 2 aufsteckbar. Im Grundgerät 1 sind die an sich bekannten elektronischen Schaltungen untergebracht, die über hier nicht gezeigte Kabel mit einem Messwertgeber verbunden sind, der unter dem Grundgerät angeordnet ist und über Heizungsrohre 1' in den Kreislauf der Wärmeversorgung eingeschaltet ist. Die Optionsmodule 2 sind gleichartig geformt und in beliebiger Reihenfolge hintereinander aufsteckbar. Jedes der Optionsmodule 2 hat eine konkave erste Seitenfläche 9', die zu der konvexen Seitenfläche 9 des Grundgerätes passt, sowie auf der gegenüberliegenden Seite eine konvexe zweite Seitenfläche 9'', die in Form und Ausführung der Seitenfläche 9 des Grundgerätes 1 entspricht. Jedes der Optionsmodule 2 besitzt einen Dichtungsring 10 auf der konkaven ersten Seitenfläche 9', der bei aufgestecktem Optionsmodul 2 an der Seitenfläche 9 des Grundgerätes 1 oder an der zweiten Seitenfläche 9'' eines bereits aufgesteckten Optionsmodules 2 dicht anliegt.

Die Seitenfläche 9 des Grundgerätes 1 und die zweiten Seitenflächen 9'' der Optionsmodule 2 sind konvex, weil diese Form dem zusammengesetzten Gehäuse des Wärmezählers grössere Stabilität verleiht, insbesondere dann, wenn mehrere Optionsmodule aufgesteckt sind. Ausserdem wirken sie ästhetisch ansprechender. Es sind aber auch ebene Seitenflächen 9, 9',9'' oder andere Formen verwendbar.

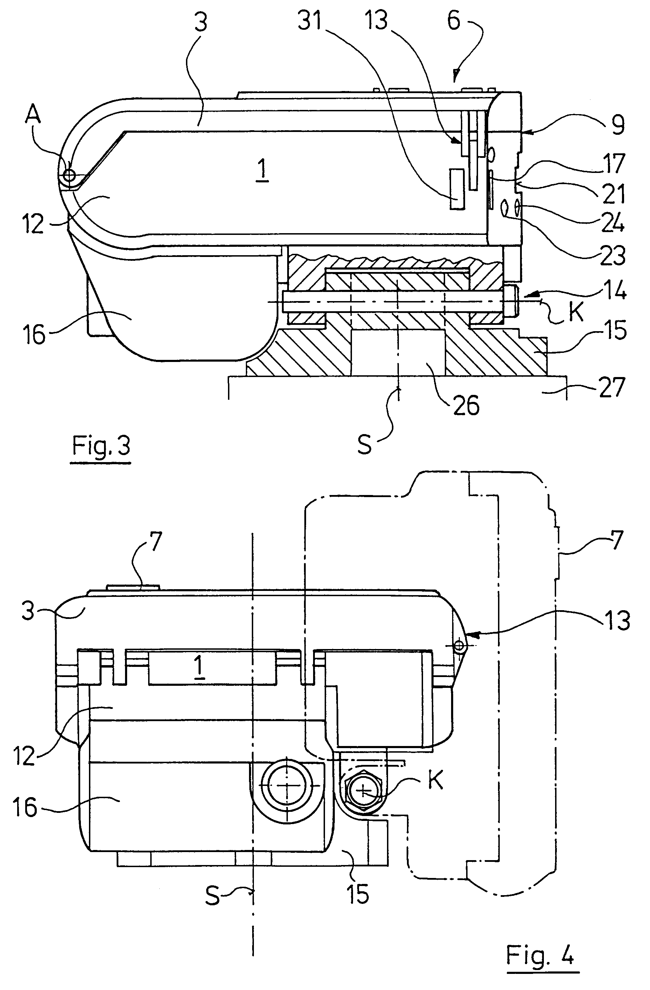

Die Figur 2 zeigt eine Ansicht der Seitenfläche 9 des Grundgerätes 1, auf die das Optionsmodul 2 (siehe Figur 1) aufsetzbar ist. Ein Unterteil 12 des Grundgerätes 1 wird vom Deckel 3 verschlossen und kann mittels Oesen 13 plombiert werden. Am Unterteil 12 ist ein Gelenkteil 14 zur gelenkigen Befestigung des Grundgerätes 1 um eine Kippachse K an einem Adapter 15 als Verbindungsstück zu einem Messwertgeber 27 (siehe Figur 3) angebracht. Die gelenkige Befestigung des Grundgerätes ist vorzugsweise so ausgeführt, dass sie eine Anzahl von rastenden Stellungen aufweist. Am Unterteil 12 ist ausserdem ein Verschlussteil 16 einrastbar angeordnet, das eine Batterie oder einen Netzadapter zur Stromversorgung des Grundgerätes 1 und der Optionsmodule 2 enthält.

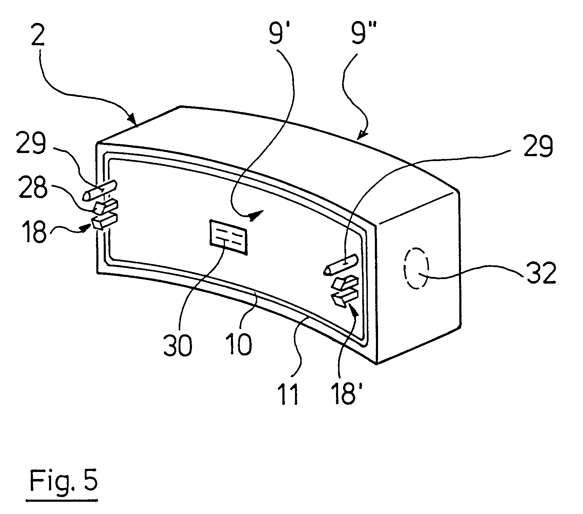

Die Seitenfläche 9 weist längs der Schmalseiten Befestigungsöffnungen 17, 17' auf, die zur Aufnahme von Befestigungszungen 18, 18' dienen, die an den Optionsmodulen 2 angebracht sind (siehe dazu Figur 5). Befestigungsöffnungen 17, 17' und Befestigungszungen 18, 18' bilden eine Einrastvorrichtung, die es erlaubt, ein Optionsmodul 2 an der Seitenfläche 9 des Grundgerätes 1 oder an einem bereits aufgesteckten Optionsmodul 2 einrastend aufzustecken. Selbstverständlich sind auch andere Befestigungsvorrichtungen möglich, beispielsweise plombierbare Schraubverbindungen. Die Seitenflächen 9, 9'' können neben den Befestigungsöffnungen 17, 17' Führungsröhren 17'' ins Geräteinnere aufweisen, damit die Optionsmodule 2 beim Aufsetzen exakt geführt und die Befestigungszungen 18, 18' keinen seitlichen Führungskräften ausgesetzt sind.

Ein Stecker 19 ermöglicht den aufgesteckten Optionsmodulen 2 den Zugang zu einer Kommunikationsschnittstelle der Elektronik des Grundgerätes 1. Der Stecker 19 ist an der Seitenfläche 9 des Grundgerätes 1 unter einer mit einem Schieber 20 spritzwasserdicht verschliessbaren Ausnehmung 21 angeordnet. In der Darstellung in Figur 2 ist der Schieber 20 in geschlossener Stellung gestrichelt gezeichnet, da er unter der Seitenfläche 9 im Gehäuse des Grundgerätes 1 angeordnet ist. Die mit dem Grundgerät 1 über den Stecker 19 verbundenen Optionsmodule 2 können auf alle aktuell gemessenen, berechneten und kumulierten Werte des Grundgerätes 1 zugreifen und aus dem Grundgerät 1 mit elektrischer Energie versorgt werden.

Der Schieber 20 weist eine Zunge auf, an deren Ende ein Nocken 22 aufgebracht ist. Die Seitenwand 9 ist mit einer ersten und einer zweiten Einrastvertiefung 23 und 24 versehen, in die der Nocken 22 einrastet und die Bewegung des Schiebers 20 hemmt. Die zwei Einrastvertiefungen 23 und 24 sind plombierbar, so dass der Nocken 22 nicht ausrastbar ist. Befindet sich der Nocken 22 des Schiebers 20 in einer der plombierten Einrastvertiefungen 23 oder 24, so lässt sich der Schieber 20 mittels eines Schiebegriffes 24' nur dann bewegen, wenn die (nicht gezeigte) Plombe über der Einrastvertiefung 23 bzw. 24 vorgängig entfernt und der Nocken 22 ausgerastet ist. Erst wenn beide Plomben entfernt sind, lässt sich der Schieber 20 in die ganz geöffnete Stellung verschieben. Der Stecker 19 ist so angeordnet, dass er zugänglich und kontaktierbar ist, wenn der Schieber 20 wenigstens in einer Zwischenstellung ist, in der der Nocken 22 in der zweiten Einrastvertiefung 24 eingerastet ist. Wenn sich der Schieber 20 in der ganz geöffneten Stellung befindet, ist neben dem Stecker 19 beim Grundgerät 1 noch ein Zusatzstecker 25 zugänglich. Der Zusatzstecker 25 erlaubt Programmanpassungen an die fest vorgegeben Bedürfnisse der Kunden oder zum Beispiel die Verbindung zu Prüf- und Abgleichgeräten. Der Schieber 20 schützt die Eichung des Gerätes, solange die Plombe über der zweiten Einrastvertiefung unversehrt ist.

Die konvexen zweiten Seitenflächen 9'' der Optionsmodule 2 sind gleich ausgebildet wie die konvexe Seitenfläche 9 des Grundgerätes 1 und weisen insbesondere die gleiche Anordnung des Steckers 19 mit dem Schieber 20 auf. Der Zusatzstecker 25 ist bei den Optionsmodulen 2 nur bei Bedarf vorhanden.

Die Figur 3 zeigt eine zweite Seitenansicht des Grundgerätes 1 ohne aufgesetzte Optionsmodule 2. In der Figur 3 ist zur deutlichen Darstellung das Gelenkteil 14 und der Adapter 15 in der Ebene der Kippachse K geschnitten gezeichnet. Der Adapter 15 besitzt seinerseits eine Zentralbohrung 26, über die er mittels einer (nicht gezeigten) Schraube um eine Schwenkachse S drehbar auf einem Messwertgeber 27 befestigt werden kann, so dass das Grundgerät 1 um die Schwenkachse S und um die Kippachse K drehbar ist. Dies erleichtert vorteilhaft das Ablesen der Anzeige 7, unabhängig von der Einbaulage des Messwertgebers 27 am Heizungsrohr 1'. Mit Vorteil sind beide Achsen K, S mit Rastvorrichtungen ausgerüstet.

Der Deckel 3 ist mit dem Unterteil 12 um eine Klappachse A gelenkig verbunden. Die Plombiervorrichtung mit den Oesen 13 umfasst eine am Deckel 3 angeordnete Gabel und eine Lasche des Unterteils 12, wobei die Lasche beim Schliessen des Deckels 3 zwischen den beiden Zinken der Gabel einfährt. Bei geschlossenem Deckel 3 sind die gleich grossen Oesen 13 in den Zinken der Gabel und in der Lasche genau aufeinander ausgerichtet.

Die Figur 4 zeigt eine dritte Seitenansicht des Grundgerätes 1, wobei mit gestrichelten Linien eine Kippstellung des Grundgerätes 1 von 90°angedeutet ist. Das Grundgerät kann derart gekippt werden, dass beispielsweise die Flüssigkristall-Anzeigeeinheit 7 unter einem optimalen Blickwinkel abgelesen werden kann. Wird das mit gestrichelten Linien gezeichnete Grundgerät 1 um die Schwenkachse S nach vorne gedreht, so erhält man die Darstellung des Grundgerätes 1 gemäss Figur 1.

Figur 5 zeigt schliesslich noch eine perspektivische Darstellung eines Optionsmodules 2. Die zwei Befestigungszungen 18, 18' zum Aufstecken des Optionsmoduls 2 auf das Grundgerät 1 oder auf ein am Grundgerät bereits aufgestecktes weiteres Optionsmodul 2 sind mit Einrastausformungen 28 versehen, die verhindern, dass die Aufsteckverbindung wieder ohne weiteres gelöst werden kann. Vorzugsweise sind die Befestigungszungen 18, 18' federnd ausgebildet, es können jedoch auch andere gleichwirkende Elemente als Einrastvorrichtung verwendet werden. Zu den Führungsröhren 17'' passende Führungsstifte 29 dienen der exakten Einführung der Befestigungszungen 18, 18' in die Befestigungsöffnungen 17, 17' (siehe Figur 2). Jedes Optionsmodul 2 besitzt an der ersten Seitenfläche 9' eine Steckkupplung 30, die zum Stecker 19 des Grundgerätes 1 oder eines anderen Optionsmodules 2 passt. Der Stecker 19 und die Steckkupplung 30 sind vorzugsweise in gängiger Art negativ und positiv ausgeformt. In jedem Optionsmodul 2 sind der Stecker 19 auf der zweiten Seitenfläche 9'' und die Steckkupplung 30 auf der ersten Seitenfläche 9' direkt Stift für Stift verbunden, damit die Reihenfolge des Aufsteckens der Optionsmodule 2 unerheblich ist.

In einer Hute 11 am Rand der ersten Seitenfläche 9' des Optionsmodul 2 ist der Dichtungsring 10 eingelegt, der die Basis der Befestigungszungen 18, 18', die Führungsstifte 29 und die Steckerkupplung 30 umgibt. Bei aufgestecktem Optionsmodul 2 liegt der Dichtungsring 10 an der Seitenfläche 9 des Grundgerätes 1 oder an der zweiten Seitenfläche 9'' eines der bereits aufgesteckten Optionsmodule 2 an und bildet vorteilhaft einen spritzwasserdichten Verschluss.

Unter Hinweis auf die Figur 2 wurde bereits angesprochen, dass zwischen Grundgerät 1 und Optionsmodul 2, sowie zwischen Optionsmodul 2 und Optionsmodul 2, über den Stecker 19 und die dazu passende Steckerkupplung 30 eine Datenverbindung hergestellt wird, die es erlaubt, alle aktuell gemessenen, berechneten und kumulierten Werte des Grundgerätes 1 an jedes Optionsmodul 2 zu übertragen. Dies birgt natürlich das Risiko, dass über den Stecker 19 der Zählerstand des Wärmezählers manipuliert werden könnte. Um zu verhindern, dass dies beim Grundgerät 1 ohne das aufgesetzte Optionsmodul 2 oder bei einem aufgesetzten Optionsmodul 2 geschieht, oder um einen derartiger Eingriff zumindestens nachträglich feststellen zu können, werden die bereits erwähnten Plomben an den beiden Einrastvertiefungen 23, 24 angebracht. Als Plomben können spezielle Klebemarken zur Abdeckung der Einrastvertiefungen 23, 24 verwendet werden. An der Befestigung der Optionsmodule 2 am Grundgerät 1 oder an einem der bereits aufgesteckten weiteren Optionsmodule 2 müssen Manipulationen dieser Art gleichfalls verhindert werden oder zumindest nachweisbar sein. Wird zur Befestigung der Optionsmodule 2 die Einrastvorrichtung 17, 17', 18, 18' verwendet, so-dürfen die Optionsmodule 2 nach dem Aufstecken und Einrasten im Grundgerät 1 oder in einem der bereits aufgesteckten Optionsmodule 2 nicht ohne weiteres wieder entfernbar sein, da sonst der Stecker 19 auch wieder ungehindert zugänglich wäre. Die Befestigungszungen 18, 18' sind deshalb mit den Einrastausformungen 28 so ausgebildet, dass sie erst dann wieder gelöst werden können, wenn das plombierte Grundgerät 1 (oder das plombierte Optionsmodul 2) zu diesem Zweck geöffnet wird (nicht dargestellt) oder wenn über normalerweise plombierte Luken 31 (siehe Figur 3) die Einrastvorrichtungen 17, 17', 18, 18' gelöst werden. Manipulationssicherheit kann natürlich auch mit anderen plombierbaren Befestigungsvorrichtungen erreicht werden, beispielsweise mit entsprechenden Befestigungsschrauben.

Der Einrastmechanismus des Verschlussteils 16 am Unterteil 12 des Grundgerätes 1, der eine Batterie oder einen Netzadapter zur Stromversorgung des Grundgerätes 1 und der Optionsmodule 2 enthalten kann, ist vorzugsweise so ausgeführt, dass ein Batteriewechsel, oder auch eine Umstellung von Batteriebetrieb auf Netzbetrieb, vor Ort ohne Demontage des Grundgerätes 1 und ohne Einsatz von Spezialwerkzeugen erfolgen kann. Entsprechende Konstruktionsmerkmale für den Einrastmechanismus sind dem Fachmann bekannt und deshalb hier nicht näher erläutert. Der Raum für die Energieversorgung ist spritzwasserdicht mittels einer Zwischenwand vom Innenraum des Grundgerätes 1 abgetrennt. Der Anschluss der Batterie bzw. des Netzadapters erfolgt über Steckverbindungen.

Die in der Figur 1 gezeigte, integrierte optische Datenübertragungs-Schnittstelle 6 ermöglicht die bequeme und fehlerfreie Ablesung von Wärmeenergiedaten. Ueber diese Schnittstelle können die turnusmässigen Ablesungen vorgenommen werden. Falls die Kunden jedoch in ihrer Privatsphäre durch turnusmassige Ablesungen vor Ort nicht gestört werden sollen, ermöglicht der Wärmezähler mit dem beschriebenen Optionsmodulkonzept auch Fernauslesung der Energiedaten. Jedes Optionsmodul 2 besitzt dazu wenigstens eine durchbrechbare Durchführung 32 (siehe Figur 5). Durch die Durchführung 32 kann in an sich bekannter Weise ein Kabel mittels Tülle spritzwasserdicht in das Optionsmodul eingeführt werden, falls über das Optionsmodul 2 Daten zur Fernablesung aufbereitet und über das Kabel an das Ablesegerät, wie z.B. ein Gebäudeautomationssystem, gesandt werden.

## Patentansprüche

1. Gehäuse für einen Wärmezähler mit einem Grundgerät (1) und mit Optionsmodulen (2) sowie einem Stecker (19) für eine elektrische Verbindung an einer Seitenfläche (9) des Grundgerätes (1), **dadurch gekennzeichnet, dass** eine Anzahl von gleichartig geformten Optionsmodulen (2) in beliebiger Reihenfolge hintereinander an der Seitenfläche (9) des Grundgerätes (1) aufsteckbar sind, dass jedes Optionsmodul (2) eine erste Seitenfläche (9') aufweist, die auf die Seitenfläche (9) des Grundgerätes (1) passt, sowie eine zweite Seitenfläche (9''), die der Seitenfläche (9) des Grundgerätes (1) entspricht, dass jedes Optionsmodul (2) an der zweiten Seitenfläche (9'') einen Stecker (19) und an der ersten Seitenfläche (9') eine zum Stecker (19) passende Steckerkupplung (30) aufweist, dass der Stecker (19) am Grundgerät (1) und an den Optionsmodulen (2) unter einer spritzwasserdicht verschliessbaren Ausnehmung (21) angeordnet ist, und dass jedes Optionsmodul (2) einen Dichtungsring (10) aufweist, der bei aufgestecktem Optionsmodul (2) an der Seitenfläche (9) des Grundgerätes (1) oder an der zweiten Seitenfläche (9'') eines der bereits aufgesteckten Optionsmodule (2) anliegt und die Verbindung spritzwasserdicht gegen aussen abschliesst.

2. Gehäuse nach Anspruch 1, **dadurch gekennzeichnet, dass** die Seitenfläche (9) des Grundgerätes (1) und die zweiten Seitenflächen (9'') jedes Optionsmoduls (2) eine konvexe Form und die ersten Seitenflächen (9') jedes Optionsmoduls (2) eine entsprechend konkave Form aufweisen.

3. Gehäuse nach Anspruch 1 oder 2, **dadurch gekennzeichnet, dass** es mit einem angeformten Gelenkteil (14) an einem Adapter (15) montierbar ist, und dass das Gelenk (14) eine Anzahl von rastenden Stellungen aufweist.

4. Gehäuse nach einem der Ansprüche 1 bis 3, **dadurch gekennzeichnet, dass** an einem Unterteil (12) des Gehäuses ein Verschlussteil (16) einrastbar angeordnet ist und dass der Verschlussteil (16) eine Batterie oder einen Netzadapter zur Stromversorgung des Grundgerätes (1) und der Optionsmodule (2) enthält.

5. Gehäuse nach einem der Ansprüche 1 bis 4, **dadurch gekennzeichnet, dass** die Optionsmodule (2) mittels einer plombierbaren Befestigungsvorrichtung, vorzugsweise einer Einrastvorrichtung (17, 18, 17', 18'), am Grundgerät (1) oder an einem bereits aufgesteckten weiteren Optionsmodul (2) befestigbar sind.

6. Gehäuse nach einem der Ansprüche 1 bis 5, **dadurch gekennzeichnet, dass** die Ausnehmung (21) mit einem Schieber (20) spritzwasserdicht verschlossen ist, wobei am Schieber (20) ein Nocken (22) angebracht ist, der in einer ersten und einer zweiten plombierbaren Einrastvertiefung (23 und 24) an der Seitenfläche (9) einrastet, und dass der Schieber (20) in der Ausnehmung (21) mittels eines Schiebegriffes (24') von einer ganz geschlossenen Stellung in eine ganz geöffnete Stellung verschiebbar ist, wobei ein Zusatzstecker (25) des Grundgerätes erst in der ganz geöffneten Stellung kontaktierbar ist.

7. Gehäuse nach Anspruch 6, **dadurch gekennzeichnet, dass** zur Ermöglichung der Verschiebung des Schiebers (20) in die ganz geöffnete Stellung an der ersten und an der zweiten plombierbaren Einrastvertiefung (23 und 24) angebrachte Plomben vorgängig entfernt werden müssen.

8. Gehäuse nach Anspruch 7, **dadurch gekennzeichnet, dass** unter der mit dem Schieber (20) verschliessbaren Ausnehmung (21) ein Stecker (19) angebracht ist, der von einer Steckerkupplung (30) des Optionsmodules 2 kontaktierbar ist, wenn der Nocken (22) des Schiebers (20) in der zweiten plombierbaren Einrastvertiefung (24) einrastet.

9. Gehäuse nach Anspruch 5, **dadurch gekennzeichnet, dass** die Einrastvorrichtung an der Seitenfläche (9) des Grundgerätes (1) und an der zweiten Seitenfläche (9'') jedes Optionsmoduls (2) Befestigungsöffnungen (17, 17') zur Aufnahme von Befestigungszungen (18, 18'), die an den Optionsmodulen (2) angebracht sind, aufweist, und dass die Befestigungszungen (18, 18') Einrastausformungen (28) zum einrastenden Aufstecken des Optionsmoduls (2) an der Seitenfläche (9) des Grundgerätes (1) oder an der zweiten Seitenfläche (9'') eines der bereits aufgesteckten weiteren Optionsmodule (2) aufweisen.
